# EUROPÄISCHE PATENTSCHRIFT

(11) **EP 1 301 779 B1**
(45) Veröffentlichungstag und Bekanntmachung des Hinweises auf die Patenterteilung: **06.09.2006**
(21) Anmeldenummer: 01957721.2
(22) Anmeldetag: 18.07.2001
(51) Int. Cl.: G01N 31/12, G01N 31/00

(54) **ANORDNUNG ZUR GESAMTSCHWEFELBESTIMMUNG**
SYSTEM FOR DETERMINING TOTAL SULFUR CONTENT
SYSTEME POUR DETERMINER LA TENEUR EN SOUFRE TOTAL

(30) Priorität: 18.07.2000 DE 10034879
(43) Veröffentlichungstag der Anmeldung: 16.04.2003
(73) Patentinhaber: SIEMENS AKTIENGESELLSCHAFT, 80333 München (DE)
(72) Erfinder: MÜLLER, Friedhelm, 76351 Linkenheim-Hochstetten (DE); OFFERMANNS, Udo, 75015 Bretten-Diedelsheim (DE)
(86) Internationale Anmeldenummer: PCT/DE2001/002686
(87) Internationale Veröffentlichungsnummer: WO 2002/006819

(56) Entgegenhaltungen:
- DE-A- 3 306 732
- US-A- 3 692 481
- US-A- 4 054 414
- US-A- 4 111 554
- US-A- 4 293 308
- US-A- 5 049 508

## Beschreibung

Die Erfindung betrifft eine Anordnung zur Gesamtschwefelbestimmung nach dem Oberbegriff des Anspruchs 1.

Es ist bekannt, zur Ermittlung des Gesamtschwefelgehalts einer zu untersuchenden Probe zunächst den Schwefel (Schwefelverbindungen) der Probe entweder durch Oxidation zu Schwefeldioxid oder durch Reduktion zu Schwefelwasserstoff, also einer relativ einfach zu analysierenden Verbindung, zu überführen und anschließend deren Konzentration mit Hilfe eines geeigneten Analyseverfahrens zu bestimmen. Beispielsweise kann der Schwefelwasserstoff gaschromatographisch von anderen Probenbestandteilen getrennt und dann ungestört flammenphotometrisch bestimmt werden (DE 37 35 599 A1). Bei der Oxidation des Schwefels bildet sich in Abhängigkeit von den technischen Bedingungen der Verbrennung neben Schwefeldioxid auch ein Anteil an Schwefeltrioxid, das unter anderem aufgrund seiner stark hygroskopischen Eigenschaften für die quantitative Bestimmung ungeeignet ist. Es werden daher für die Verbrennung technische Bedingungen angestrebt, die dazu führen, dass der Schwefel der Probe weitestgehend zu Schwefeldioxid umgesetzt wird. Dies kann beispielsweise durch Verwendung von Katalysatoren oder Reaktoren bei Temperaturen von über 1000°C erreicht werden. Im Laufe der Zeit kann sich jedoch die Katalysatoroberfläche mit Feststoffen, z.B. Ruß, belegen, die bei der Verbrennung der Probe entstehen und sich niederschlagen. Außerdem ist es schwierig, den Katalysator so zu kapseln dass seine Oberflächentemperatur einen Einsatz in explosionsgefährdeten Bereichen zulässt.

Aus der US-A-4 111 554 ist es bekannt, die Probe zuerst gaschromatographisch zu trennen, danach in einem Flammenionisations-Detektor zu verbrennen und anschließend die Verbrennungsprodukte einem nachgeordneten Detektor zuzuführen. Der Flammenionisations-Detektor dient dazu, neben der Verbrennung der getrennten Probe zur Erzeugung von Schwefeldioxid auch noch Kohlenwasserstoffe zu detektieren, während der nachgeordnete Detektor nur Schwefeldioxid detektiert. Dementsprechend wird das Messsignal des Flammenionisations-Detektors parallel zu dem Signal des Detektors aufgezeichnet.

Aus der US-A-4 054 414 ist eine Anordnung der eingangs angegebenen Art zur Gesamtschwefelbestimmung einer Probe mit einem geschlossenen Brenner zur Verbrennung der Probe, einer nachgeordneten Dosiereinrichtung zur dosierten Zuführung der Verbrennungsprodukte zu einem Gaschromatographen, dem Gaschromatographen zur Trennung des Schwefeldioxids von anderen Verbrennungsprodukten und einen nachgeordneten Detektor zum Nachweis des Schwefeldioxids bekannt. Eine ähnliche Anordnung ist auch aus der DE 33 06 732 A bekannt.

Der Erfindung liegt die Aufgabe zugrunde, mit einfachen Mitteln eine besonders genaue Gesamtschwefelbestimmung zu ermöglichen.

Gemäß der Erfindung wird die Aufgabe durch die in Anspruch 1 angegebene Anordnung gelöst, von der vorteilhafte Weiterbildungen in den Unteransprüchen angegeben sind.

Dabei ist bei der Anordnung der eingangs angegebenen Art der Brenner ein Flammenionisations-Detektor, mit dessen Messsignal das Detektorsignal des dem Gaschromatographen nachgeordneten Detektors korrigiert wird.

In dem Flammenionisations-Detektor wird durch gleichmäßige Verbrennung der Probe in einer, nicht zu heißen, Flamme der gebundene Schwefel weitestgehend zu Schwefeldioxid umgesetzt, wobei über die nachfolgende gaschromatographische Ermittlung der Schwefeldioxid-Konzentration eine genaue Bestimmung des Gesamtschwefelgehalts der Probe ermöglicht ist. Dabei kann bei der erfindungsgemäßen Anordnung die Probe undosiert verbrannt werden, wobei lediglich die Verbrennungsprodukte dem Gaschromatographen dosiert zugeführt werden. Bei der bekannten Verwendung von Katalysatoren oder Reaktoren muss dagegen die Probe vor der Verbrennung dosiert werden, weil u.a. wegen der oben bereits genannten Probleme eine kontinuierliche Verbrennung der gesamten Probe in dem Katalysator bzw. Reaktor technisch kaum durchführbar ist. Bei der Verbrennung der Probe in dem Flammenionisations-Detektor mit kleiner Flamme können die darüber hinaus Vorschriften des Explosionsschutzes ohne weiteren Aufwand eingehalten werden, zumal es sich bei dem Flammenionisations-Detektor um ein in der Analytik vielfach verwendetes Gerät handelt, von dem es druckfest gekapselte Ausführungen für den Betrieb in explosionsgeschützten Bereichen gibt. Schließlich wird bei der erfindungsgemäßen Anordnung die Detektor-Funktion des Flammenionisations-Detektors zur Korrektur des von dem Detektor am Ende des Gaschromatographen gelieferten Messsignals genutzt. Mengenschwankungen bei der Verbrennung der Probe, die beispielsweise durch Änderungen der Dichte der Probe hervorgerufen werden, beeinflussen nämlich gleichermaßen das von dem Flammenionisations-Detektor gelieferte Messsignal wie auch das die Schwefeldioxid-Konzentration anzeigende Detektorsignal, so dass durch die Korrektur, im einfachsten Fall durch Verhältnisbildung beider Signale, das Detektorsignal von durch Unregelmäßigkeiten bei der Verbrennung verursachten Signalanteilen befreit wird.

Es hat sich als vorteilhaft herausgestellt, die Probe in dem Flammenionisations-Detektor unter Wasserstoff- und Sauerstoffzufuhr zu verbrennen, wobei der Sauerstoff vorzugsweise als Gasgemisch, insbesondere als Luft, zugeführt wird. Durch die letztgenannte Maßnahme wird verhindert, dass die Flamme zu heiß wird und bei der Verbrennung Schwefeltrioxid gebildet wird. Der Wasserstoff kann in reiner Form oder als Gemisch, beispielsweise mit einem Trägergas, zugeführt werden.

Soweit es sich bei der Probe um eine Flüssigkeit, beispielsweise Benzin, handelt, ist in einem Zuführungsweg für die Probe vor dem Flammenionisations-Detektor vorzugsweise ein Probenverdampfer geschaltet, so dass eine gleichmäßige Verdampfung und damit eine ungestörte Verbrennung der Probe erreicht wird. Um ein Kondensieren der verdampften Probe zu verhindern, ist der Zuführungsweg für die Probe zwischen dem Probenverdampfer und dem Flammenionisations-Detektor 19 wärmeisoliert oder, vorzugsweise zusammen mit dem Probenverdampfer, in einem entsprechend temperierten Ofen angeordnet. Außerdem kann der Probe noch vor dem Probenverdampfer der Wasserstoff bzw. der Sauerstoff (z.B. Luft) zugeführt werden, was den Vorteil hat, dass der Taupunkt der verdampften Probe aufgrund der Mischung mit dem Wasserstoff bzw. Sauerstoff wesentlich niedriger ist, als ohne diese Gaszumischung.

Der Zuführungsweg für die Probe enthält in vorteilhafter Weise hinter der Wasserstoff- bzw. Sauerstoffzufuhr zumindest abschnittsweise ein Kapillarmaterial, beispielsweise in Form eines Drahtgewebes, einer Litze o.ä., so dass die Probe mit dem ihr zugeführten Gas gut vermischt wird und nicht in Form einzelner Pfropfen in den Probenverdampfer gelangt und dort ungleichmäßig zu einem inhomogenen Gemisch verdampft. Außerdem wird durch die Kapillarwirkung des Gewebes der Transport der flüssigen Probe zu dem Probenverdampfer unterstützt und ein Rückfluss der verdampften Probe unterbunden. In entsprechender Weise kann auch der Innenraum des Probenverdampfers mit einem geeigneten Material zur Oberflächenvergrößerung, z.B. einer Fritte, gefüllt sein.

Für den Nachweis des Schwefeldioxids am Ausgang des Gaschromatographen stehen eine Reihe bekannter Detektoren, wie z.B. Wärmeleitfähigkeits-Detektor, zu Verfügung; besonders einfach und mit hoher Empfindlichkeit erfolgt der Nachweis des Schwefeldioxids mit einem Flammenphotometer-Detektor.

Zur weiteren Erläuterung der Erfindung wird im Folgenden auf die Figuren der Zeichnung Bezug genommen; im Einzelnen zeigen,

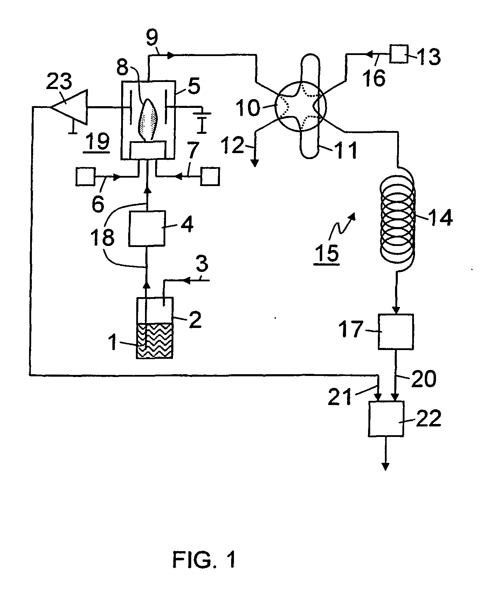

- Figur 1: ein Ausführungsbeispiel der erfindungsgemäßen Anordnung zur Gesamtschwefelbestimmung einer Probe,
- Figur 2: ein Beispiel für eine kontinuierliche Verdampfung der Probe und ihre anschließende Verbrennung in einer Flamme und
- Figur 3: ein Beispiel für eine diskontinuierliche Verdampfung der Probe und ihre anschließende Verbrennung.

Eine auf ihren Gesamtschwefelgehalt zu untersuchende flüssige Probe 1, hier z.B. Benzin, wird aus einem Probenbehälter 2 mittels Druckgas 3 zu einem Probenverdampfer 4 gefördert. Die verdampfte Probe 1 wird anschließend einem geschlossenen Brenner 5 zugeführt und dort unter Wasserstoffzufuhr 6 und Luftzufuhr 7 in einer Flamme 8 verbrannt, wobei die Schwefelverbindungen der Probe 1 im Wesentlichen in Schwefeldioxid umgesetzt werden. Die gasförmigen Verbrennungsprodukte 9 der Probe 1, also das Schwefeldioxid sowie Kohlendioxid, Wasserdampf, Stickoxide usw., werden einer Dosiereinrichtung 10, hier in Form eines steuerbaren Dosierventils, zugeführt, welches in einer ersten, hier durch ausgezogenen Linien dargestellten Ventilstellung die Verbrennungsprodukte 9 durch ein Dosiervolumen 11 hindurch zu einem Gasauslass 12 führt. In dieser Ventilstellung ist außerdem eine Trägergasquelle 13 mit einer hier vereinfacht als eine Trennsäule dargestellten Trenneinrichtung 14 eines Gaschromatographen 15 verbunden, so dass die Trenneinrichtung 14 von dem Trägergas 16 gespült wird. In der zweiten, hier gestrichelt dargestellten Ventilstellung werden die von dem Brenner 5 kommenden Verbrennungsprodukte 9 direkt zu dem Gasauslass 12 geleitet. Das Dosiervolumen 11 ist dann in den Gasweg zwischen der Trägergasquelle 13 und der Trenneinrichtung 14 geschaltet, so dass das Trägergas 16 die in dem Dosiervolumen 11 enthaltenen Verbrennungsprodukte 9 als Gaspfropf durch die Trenneinrichtung 14 schiebt. Dabei wird das Schwefeldioxid von den anderen Verbrennungsprodukten getrennt und anschließend in einem Detektor 17 quantitativ bestimmt. Bei dem gezeigten Ausführungsbeispiel besteht der Detektor 17 aus einem Flammenphotometer-Detektor (FPD), wobei jedoch auch andere, zum Nachweis von Schwefeldioxid geeignete Detektoren, beispielsweise ein Wärmeleitfähigkeits-Detektor (WLD), in Frage kommen können. Alle Teile der gezeigten Anordnung, welche die Verbrennungsprodukte 9 führen, sind auf eine Temperatur von mehr als 100°C temperiert, um eine Kondensation des Verbrennungsprodukts Wasserdampf und die Bildung von Säuren zu verhindern. Der zwischen dem Probenverdampfer 4 und dem Brenner 5 liegende Bereich des Zuführungswegs 18 für die Probe 1 ist ebenfalls so temperiert oder wärmeisoliert, dass die verdampfte Probe 1 nicht kondensieren kann.

Bei dem hier verwendeten Brenner 5 handelt es sich um einen Flammenionisations-Detektor (FID) 19, der in anderen Zusammenhängen in der Analytik vielfach Verwendung findet und von dem es druckfest gekapselte Ausführungen für den Betrieb in explosionsgeschützten Bereichen gibt. Zusätzlich wird hier die Detektor-Funktion des Flammenionisations-Detektors 19 genutzt, um das Detektorsignal 20 des dem Gaschromatographen 15 nachgeordneten Detektors 17 von Signalanteilen zu befreien, die auf Mengenänderungen der Probe 1 beruhen und den gemessenen Wert der Schwefeldioxid-Konzentration bzw. des daraus abgeleiteten Gesamtschwefelgehalts der Probe 1 verfälschen. Dazu wird das Detektorsignal 20 mit dem von dem Flammenionisations-Detektor 19 gelieferten Messsignal 21 in einer Korrektureinrichtung 22 durch Verhältnisbildung korrigiert. Das Messsignal 21 des Flammenionisations-Detektors 19 wird in bekannter Weise dadurch gebildet, dass die in der Flamme 8 erzeugten Ionen über Elektroden unter Hochspannung abgesaugt werden und der daraus resultierende Strom in einem Elektrometerverstärker 23 in das Messsignal 21 umgewandelt wird.

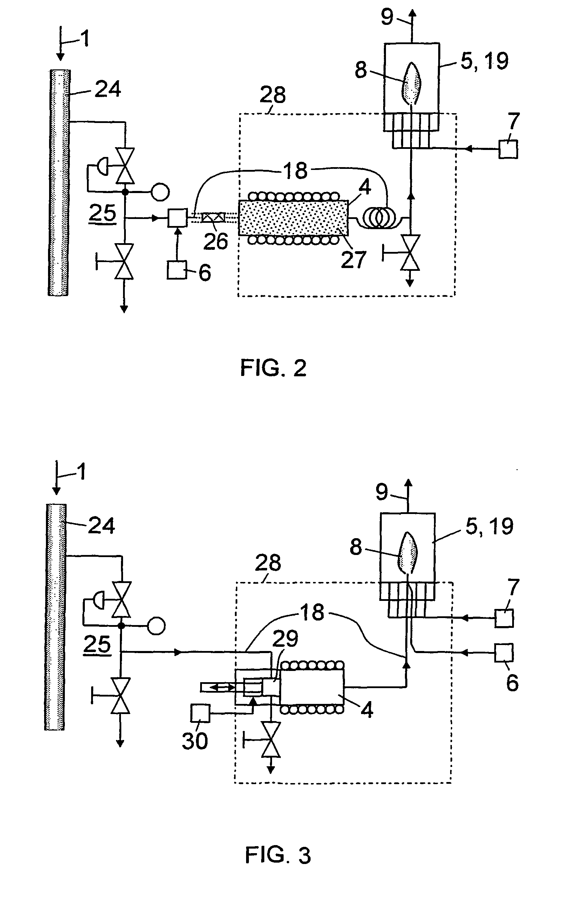

Figur 2 zeigt detaillierter ein Beispiel für eine kontinuierliche Verdampfung und anschließende Verbrennung der flüssigen Probe 1, die hier bei konstanten Druckverhältnissen eine Rohrleitung 24 durchfließt. Aus der Rohrleitung 24 wird eine geringe Probenmenge in den Zuführungsweg (Zuführungsleitung) 18 zu dem Brenner 5 (Flammenionisations-Detektor 19) abgezweigt, wobei der Durchfluss mittels einer steuerbaren Ventilanordnung 25 konstant gehalten wird. In den Zuführungsweg 18 ist der Probenverdampfer 4 geschaltet. Vor dem Probenverdampfer 4 erfolgt die Wasserstoffzufuhr 6, wobei der anschließende Bereich des Zuführungswegs 18 bis zu dem Probenverdampfer 4 ein Kapillarmaterial 26, hier in Form einer Metalllitze, enthält. Dadurch wird eine gute Vermischung der Probe 1 mit dem ihr zugeführten Wasserstoff erreicht, so dass keine einzelnen Proben- bzw. Wasserstoffpfropfen entstehen, die zu einer ungleichmäßigen Verdampfung und später zu einer ungleichmäßigen Verbrennung führen können. Außerdem wird durch die Kapillarwirkung der Metalllitze der Transport der flüssigen Probe 1 zu dem Probenverdampfer 4 unterstützt und umgekehrt ein Rückfluss der verdampften Probe 1 unterbunden.

Zu Erzielung einer gleichmäßigen Verdampfung ist auch der Innenraum des Probenverdampfers 4 mit einem Material 27 mit großer Oberfläche, hier einer Fritte, gefüllt. Durch die Vermischung mit dem Wasserstoff wird der Taupunkt der verdampften Probe 1 herabgesetzt, so dass ein mit vergleichsweise geringer Temperatur betriebener Ofen 28 ausreicht, um ein Kondensieren der verdampften Probe 1 bzw. einzelner Probenbestandteile zu verhindern. Die kontinuierlich verdampfte und mit Wasserstoff gemischte Probe 1 gelangt schließlich zu dem Brenner 5, wo sie unter Luftzufuhr 7 in der Flamme 8 gleichmäßig verbrennt.

Bei dem in Figur 3 gezeigten Beispiel weist der Probenverdampfer 4 eingangsseitig eine steuerbare Probenzuführeinrichtung 29 auf, die ein vorgegebenes Volumen der flüssigen Probe 1 in den Innenraum des Probenverdampfers 4 einführt. Nachdem die Probe 1 vollständig verdampft ist und sich in dem Probenverdampfers 4 und dem daran anschließenden Abschnitt des Zuführungsweges 18 gleichmäßig verteilt hat, wird sie mittels eines Trägergases aus einer Trägergasquelle 30 in einem kontinuierlichen Strom zu dem Brenner 5 gefördert, wo sie unter Wasserstoffzufuhr 6 und Luftzufuhr 7 verbrannt wird.

Schließlich besteht auch die Möglichkeit, die Probe in den Probenverdampfer einzuspritzen.

## Patentansprüche

1. Anordnung zur Gesamtschwefelbestimmung einer Probe (1) mit einem geschlossenen Brenner (5) zur Verbrennung der Probe (1), einer nachgeordneten Dosiereinrichtung (10) zur dosierten Zuführung der Verbrennungsprodukte (9) zu einem Gaschromatographen (15), dem Gaschromatographen (15) zur Trennung des Schwefeldioxids von anderen Verbrennungsprodukten und einem nachgeordneten Detektor (17) zum Nachweis des Schwefeldioxids, **dadurch gekennzeichnet, dass** der Brenner (5) ein Flammenionisations-Detektor (19) ist und dass das von dem Detektor (17) erzeugte Detektorsignal (20) mit dem von dem Flammenionisations-Detektor (19) gelieferten Messsignal (21) korrigiert wird.

2. Anordnung nach Anspruch 1, **dadurch gekennzeichnet, dass** die Probe (1) unter Wasserstoffzufuhr (6) und Sauerstoffzufuhr (7) verbrannt wird.

3. Anordnung nach Anspruch 2, **dadurch gekennzeichnet, dass** der Sauerstoff als Luft zugeführt wird.

4. Anordnung nach einem der vorangehenden Ansprüche, **dadurch gekennzeichnet , dass** bei flüssiger Probe (1) in einem Zuführungsweg (18) für die Probe (1) vor dem Flammenionisations-Detektor (19) ein Probenverdampfer (4) geschaltet ist.

5. Anordnung nach Anspruch 4, **dadurch gekennzeichnet, dass** der Zuführungsweg (18) für die Probe (1) zumindest im Bereich zwischen dem Probenverdampfer (4) und dem Flammenionisations-Detektor (19) in einem Ofen (28) angeordnet ist.

6. Anordnung nach Anspruch 4 oder 5, **dadurch gekennzeichnet, dass** der Probe (1) entweder der Wasserstoff oder der Sauerstoff vor dem Probenverdampfer (4) zugeführt wird.

7. Anordnung nach Anspruch 6, **dadurch gekennzeichnet, dass** der Zuführungsweg (18) für die Probe (1) hinter der Wasserstoff- bzw. Sauerstoffzufuhr zumindest abschnittsweise ein Kapillarmaterial (26) enthält.

8. Anordnung nach einem der Ansprüche 4 bis 7, **dadurch gekennzeichnet, dass** der Innenraum des Probenverdampfers (4) mit einem Material (27) mit großer Oberfläche gefüllt ist.

9. Anordnung nach einem der vorangehenden Ansprüche, **dadurch gekennzeichnet, dass** der Detektor (17) ein Flammenphotometer-Detektor ist.

## Claims

1. Arrangement for determining the total sulfur of a sample (1), having a closed burner (5) for burning the sample (1), a downstream dosing device (10) for dosed supply of the combustion products (9) to a gas chromatograph (15), the gas chromatograph (15) for separating sulfur dioxide from other combustion products and a downstream detector (17) for detecting the sulfur dioxide, **characterized in that** the burner (5) is a flame ionization detector (19) and **in that** the detector signal (20) generated by the detector (17) is corrected using the measurement signal (21) delivered by the flame ionization detector (19).

2. Arrangement according to Claim 1, **characterized in that** the sample (1) is burnt with a supply of hydrogen (6) and a supply of oxygen (7).

3. Arrangement according to Claim 2, **characterized in that** the oxygen is supplied as air.

4. Arrangement according to one of the preceding claims, **characterized in that** in the case of a liquid sample (1), a sample evaporator (4) is connected upstream of the flame ionization detector (19) in a supply path (18) for the sample (1).

5. Arrangement according to Claim 4, **characterized in that** the supply path (18) for the sample (1) is arranged in an oven (28) at least in the region between the sample evaporator (4) and the flame ionization detector (19).

6. Arrangement according to Claim 4 or 5, **characterized in that** either the hydrogen or the oxygen is supplied to the sample (1) upstream of the sample evaporator (4).

7. Arrangement according to Claim 6, **characterized in that** the supply path (18) for the sample (1) at least locally contains a capillary material (26) downstream of the hydrogen or oxygen supply.

8. Arrangement according to one of Claims 4 to 7, **characterized in that** the interior of the sample evaporator (4) is filled with a material (27) having a large surface area.

9. Arrangement according to one of the preceding claims, **characterized in that** the detector (17) is a flame photometer detector.

## Revendications

1. Dispositif de détermination du soufre total d'un échantillon (1) comprenant un brûleur (5) fermé pour la combustion de l'échantillon (1), un dispositif (10) de dosage monté en aval pour l'envoi de manière dosée des produits (9) de combustion à un chromatographe (15) en phase gazeuse, le chromatographe (15) en phase gazeuse pour séparer le dioxyde de soufre d'autres produits de combustion et un détecteur (17) monté en aval du chromatographe (15) en phase gazeuse de détection du dioxyde de soufre, **caractérisé en ce que** le brûleur (5) est un détecteur (9) à ionisation de flamme et **en ce que** le signal (20) de détecteur produit par le détecteur (17) est corrigé par le signal (21) de mesure fourni par le détecteur (19) à ionisation de flamme.

2. Dispositif suivant la revendication 1, **caractérisé en ce que** l'échantillon (1) est brûlé avec apport (6) d'hydrogène et apport (7) d'oxygène.

3. Dispositif suivant la revendication 2, **caractérisé en ce que** l'oxygène est apporté sous forme d'air.

4. Dispositif suivant l'une des revendications précédentes, **caractérisé en ce que**, pour un échantillon (1) liquide, on monte, dans un trajet (18) d'apport de l'échantillon (1), un évaporateur (4) d'échantillon en amont du détecteur (19) à ionisation de flamme.

5. Dispositif suivant la revendication 4, **caractérisé en ce que** le trajet (18) d'apport de l'échantillon (1) est disposé dans un four (28) au moins dans la zone comprise entre l'évaporateur (4) d'échantillon et le détecteur (19) à ionisation de flamme.

6. Dispositif suivant la revendication 4 ou 5, **caractérisé en ce que** l'hydrogène ou l'oxygène est apporté à l'échantillon (1) en amont de l'évaporateur (4) de l'échantillon.

7. Dispositif suivant la revendication 6, **caractérisé en ce que** le trajet (8) d'apport de l'échantillon (1) comporte en aval de l'apport d'hydrogène ou d'oxygène une matière (26) capillaire au moins par tronçon.

8. Dispositif suivant l'une des revendications 4 à 7, **caractérisé en ce que** l'intérieur de l'évaporateur (4) de l'échantillon est garni d'une matière (27) d'une grande surface.

9. Dispositif suivant l'une des revendications précédentes, **caractérisé en ce que** le détecteur (17) est un détecteur à photomètre de flamme.
